Europäisches Patentamt

European Patent Office

Office européen des brevets

(19)

(11) Publication number: **0 313 207**
**A2**

# (12) EUROPEAN PATENT APPLICATION

(21) Application number: 88308399.0

(22) Date of filing: 12.09.88

(51) Int. Cl.4: **G06F 3/023 , G06F 15/02**

(30) Priority: 23.10.87 US 113102

(43) Date of publication of application:
26.04.89 Bulletin 89/17

(84) Designated Contracting States:
**DE FR GB**

(71) Applicant: **Hewlett-Packard Company**
**3000 Hanover Street**
**Palo Alto California 94304(US)**

(72) Inventor: **Johnson, William T.**
**722 Quarry Road**
**Albany, OR 97321(US)**
Inventor: **York, Dennis C.**
**7466 Arboretum**
**Corvallis, OR 97330(US)**

(74) Representative: **Colgan, Stephen James et al**
**CARPMAELS & RANSFORD 43 Bloomsbury**
**Square**
**London WC1A 2RA(GB)**

(54) **Method and apparatus for inputting characters.**

(57) A calculator 10 is disclosed having an improved method and apparatus for inputting characters. The improved method and apparatus has a reduced cost and is easier to use. The apparatus comprise CPU 21, ROM 23, RAM 22, a display 24 and keyboard 25. The keyboard 25 has a first row of keys 16 which act as soft keys. The display 24 has two display lines, the first line is used to display a menu. The characters to be input are divided into sets, each set corresponding to a soft-key. Once a set is selected, the individual characters in that set are displayed and may be inputted by selecting the appropriate soft-key.

FIG 1

# METHOD AND APPARATUS FOR INPUTTING CHARACTERS

## BACKGROUND

### 1. Field of Invention

This invention relates to the field of data processing and more particularly to a simplified method and apparatus for inputting characters into a data processing system employing user actuated input means, where the number of input means is substantially less than the number of characters which may be inputted.

### 2. Description of the Prior Art

There are many types of data processing systems. One class of data processing systems is personal handheld computers, commonly called calculators.

These systems typically comprise a small case containing a CPU, RAM, ROM, display and keyboard. The CPU, RAM and ROM are of conventional design and are usually integrated into a single integrated circuit. The display, originally suitable only for displaying a single line of numbers, now is typically capable of displaying both numbers and characters and may be capable of displaying two or more lines of numbers and characters. The keyboard comprises a plurality of keys. The number of keys is kept to a minimum in order to keep the size of the calculator as small as possible while maintaining suitable spacing between keys.

Modern calculators do far more than merely add, subtract, multiply and divide. These calculators are capable of calculating payments, interest rates, and bond calculations. One new feature being added to these calculators is a solve feature.

The solve feature permits a user to enter a equation and the values for all but one of the variables of the equation. The calculator then solves the equation for the desired variable, substitutes the supplied values and displays the result.

In order to use the solve function, the user must be able to enter an equation into the calculator. This means that the user must be able to enter the names of variables as well as numbers and mathematical functions. The keyboards of the original calculators typically had numbers and mathematical functions, characters, particularly alphabetic characters, were not found.

Several prior art solutions have been employed to add alphabetic character capability to calculators. One prior art solution was to increase the number of keys on the keyboard until there were sufficient keys for each alphabetic character, number and mathematical function desired. This was acceptable for desktop calculators, however this approach is not acceptable for portable calculators because it makes these calculators too large and cumbersome.

Another method was to add a separate keyboard which could be folded over the original keyboard and which contained at least twenty six keys, one for each alphabetic character. Although this permitted a smaller package, the hinge added considerable cost to the calculator.

A third method where there were already twenty six or more keys on the calculator was to add an alpha mode. One key was used to place the calculator into alpha mode, then each of the remaining keys now produced a alphabetic character, rather than their original number or mathematical function. This method, however, required a considerable amount of searching around the keyboard for the character to be inputted. The searching was particularly difficult when the keyboard had already been expanded through the use of a shifted function key.

What is needed is a simplified method for entering characters into a data processing system.

## SUMMARY

In accordance with the preferred embodiment of the present invention, an apparatus and method are disclosed for inputting characters into a data processing system. The apparatus and method are optimized for inputting alphabetic character, but is capable of entering an infinite number of characters.

The apparatus comprises a display means having at least two lines, the first line for displaying a series of predetermined menus and any additional lines for displaying the characters inputted into the data processing system; a keyboard having a plurality of keys, the number of keys being less than the number of characters; menu storage means for storing a plurality of predetermined menus; and control means connected to the display means, keyboard, and menu storage means.

The primary objective of the present invention, therefore, is to provide a low cost and simplified method and apparatus for inputting characters.

Another object of the present invention is to eliminate time consuming searching for a character.

A further object of the present invention was to permit an large number of characters to be inputted.

## DESCRIPTION OF THE DRAWINGS

FIG 1 is a front view of the preferred embodiment of the present invention.

FIG 2 is a block diagram of the preferred embodiment of the present invention.

FIG 3 is a partial view of FIG 1 illustrating an initial menu.

FIG 4 is a partial view of FIG 1 illustrating a solve menu.

FIG 5 is a partial view of FIG 1 illustrating the first step of the preferred embodiment of the present invention.

FIG 6 is a partial view of FIG 1 illustrating the second step of the preferred embodiment of the present invention.

FIG 7 is a partial view of FIG 1 illustrating the first step of the preferred embodiment of the present invention.

FIG 8 is a partial view of FIG 1 illustrating the second step of the preferred embodiment of the present invention.

FIG 9 is a partial view of FIG 1 illustrating the first step of the preferred embodiment of the present invention.

FIG 10 is a partial view of FIG 1 illustrating the second step of the preferred embodiment of the present invention.

FIG 11 is a partial view of FIG 1 illustrating the first step of the preferred embodiment of the present invention.

FIG 12 is a partial view of FIG 1 illustrating the first step of the expanded embodiment of the present invention.

FIG 13 is a partial view of FIG 1 illustrating the second step of the expanded embodiment of the present invention.

FIG 14 is a partial view of FIG 1 illustrating the third step of the expanded embodiment of the present invention.

FIG 15 is a partial view of FIG 1 illustrating the first step of the preferred embodiment of the present invention.

FIG 16 is a flow chart illustrating preferred embodiment of the present invention.

## DESCRIPTION OF THE PREFERRED EMBODIMENT

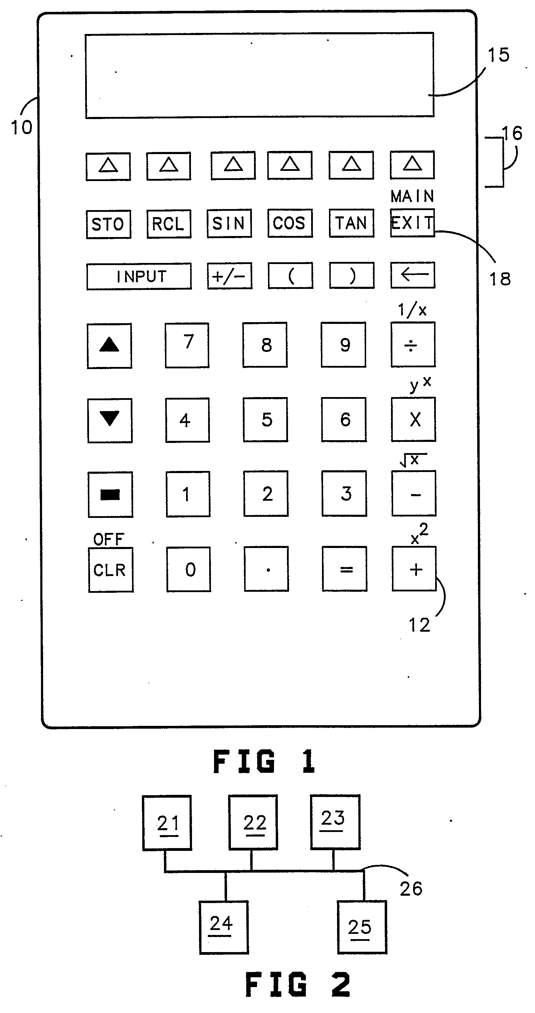

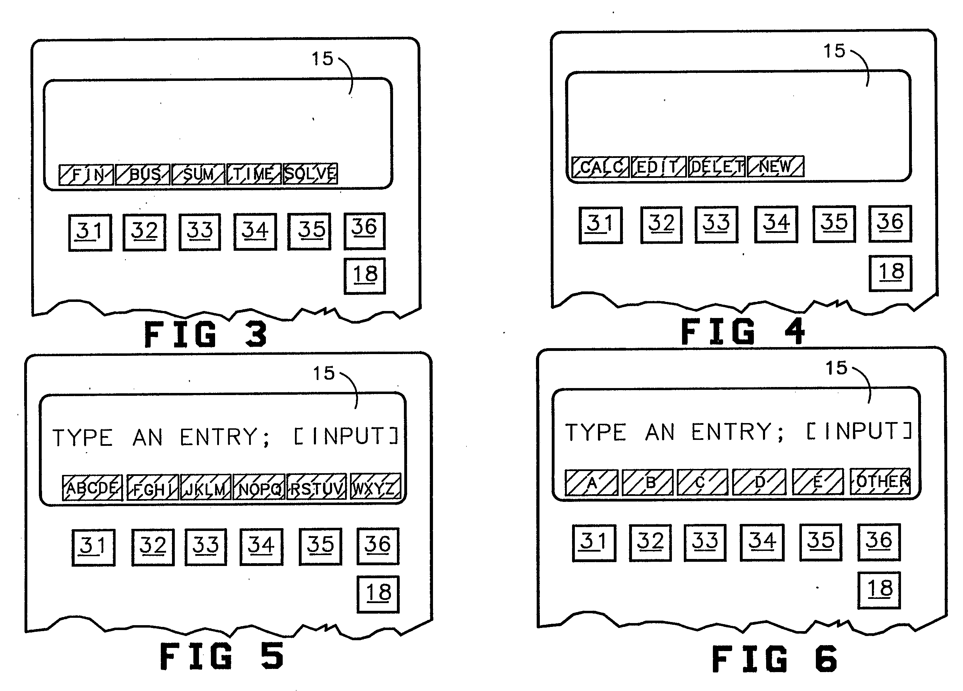

FIG 1 is a front view of the preferred embodiment of the present invention. The calculator 10 comprises a display 15 having two or more display lines, a keyboard having a plurality of keys 12 and a data processing system contained inside the calculator 10. The preferred embodiment of the display comprises a dot matrix display capable of displaying two lines of information. The first or lower line of the display is used to display menu items. These menu items are usually in inverse mode as illustrated in FIG 3. The top or second line of the display is used to prompt the user for information, display results, and display information being input into the calculator. The preferred embodiment of the keyboard comprises thirty-seven keys 12. Of particular interest is the top row 16 of six keys which are located immediately below the display. These keys will be referred to as soft-keys.

FIG 2 is a block diagram of the preferred embodiment of the present invention. The system comprises a CPU 21, RAM 22, ROM 23, display 24 and keyboard 25. The system elements are connected together over the CPU bus 26. The CPU 21, RAM 22, and ROM 23 are of conventional design. The ROM contains a plurality of menus which are employed in the preferred embodiment of the present invention, as well as, the control program for the calculator. The RAM 22 is used to hold temporary data, formulas, names, etc.

When the calculator is activated for the first time, the CPU performs a self test and displays an initial menu from the ROM. FIG 3 is a partial view of FIG 1 illustrating the initial menu. By pressing one of the soft-keys, the user selects a mode or function, for example, key 31, selects the "FIN" or financial functions of the calculator; key 32, the business functions; key 33, the statistical function; key 34, the time functions; and finally key 35, the solve functions. Of particular interest is the solve functions since they require the entry of alphabetic characters.

Pressing key 35 selects the solve functions. The CPU then fetches the next menu from ROM and displays it on the first line of the display. FIG 4 is a partial view of FIG 1 displaying the solve system menu. In order to enter an equation, the user presses key 34, "NEW". The CPU displays the first character menu and a message "TYPE AN ENTRY", which is to be terminated by the "INPUT" key. An example equation illustrating the operation of the preferred embodiment is "CATÄ + DOG = CHICKEN". The + and = characters are already available on the calculator as functions, however in the input mode, they generate their corresponding character. The other characters may be entered by employing the preferred embodiment of the present invention through a menu facility similar to the facility employed to select calculator functions.

In order to employ the present invention, a list of characters to be input into the system which are not available on any other keys is constructed. Once the list is constructed, the listed characters are divided into sets. Factors determining how to group the characters include frequency of use and normal order in thought. Keys which are accessed frequently are presented to the user first. In the preferred embodiment of the present invention, the characters A-Z, which do not exist on any of the keys, are divided into sets of characters.

The number of characters in each set must be less than or equal to the number of soft-keys on row 16. In the preferred embodiment of the present invention, there are six keys, therefore, no set may contain more than six characters. The number of sets must also be less than or equal to the number of keys, therefore there can be no more than six sets in the preferred embodiment.

The first menu, therefore, consists of each set of characters displayed together immediately above the corresponding soft-key. A plurality of second menus, one menu for each set, each consisting of a single character in order from the respective set assigned to a soft-key. In the preferred embodiment, these menus are stored in ROM.

The remaining characters to be displayed are handled as extended characters as described below.

FIG 5 is a partial view of FIG 1 illustrating the first step of the preferred embodiment of the present invention. The CPU displays this first menu along with the prompt to enter data. In order to enter the character "C", the user first selects the set of characters containing the character "C" by pressing key 31.

The CPU displays the appropriate second menu consisting of the individual characters. FIG 6 is a partial view of FIG 1 illustrating the second step of the preferred embodiment of the present invention. The user may then select the character "C" by pressing key 33. In this manner any character A-Z may be entered using two keystrokes.

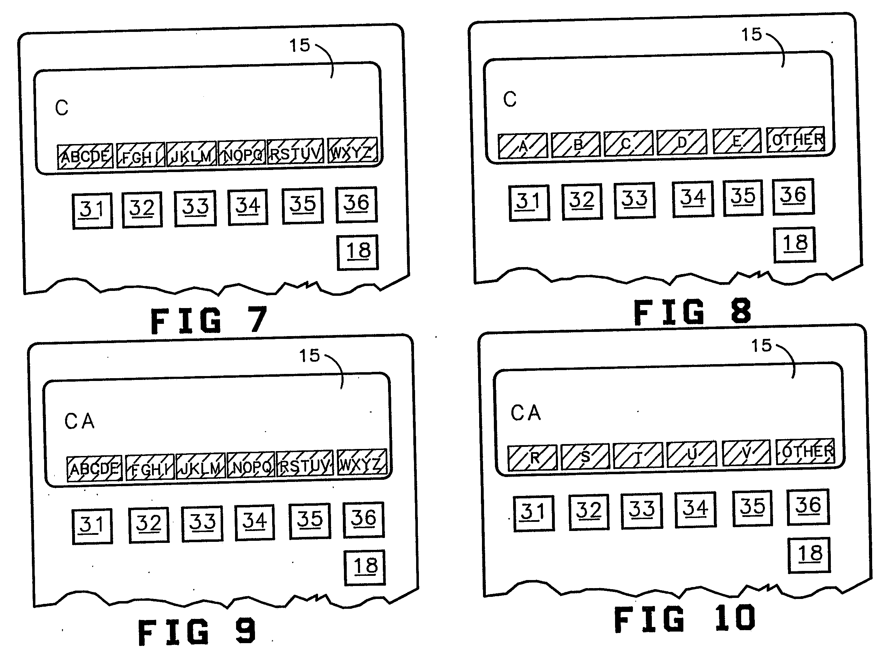

When the CPU receives the first character, it clears the prompt lines, displays the character, in this example "C", and again prompts for the next character by displaying the first menu. FIG 7 is a partial view of FIG 1 illustrating the first step of the preferred embodiment of the present invention. In order to enter the character "A", the user first selects the set of characters containing the character "A" by pressing key 31.

The CPU displays the appropriate second menu consisting of the individual characters. FIG 8 is a partial view of FIG 1 illustrating the second step of the preferred embodiment of the present invention. The user may then select the character "A" by pressing key 31.

The CPU then appends the second and subsequent character to the current character list and displays the characters, in this example "CA", and again prompts for the next character by displaying the first menu. FIG 9 is a partial view of FIG 1 illustrating the first step of the preferred embodiment of the present invention. In order to enter the character "T", the user first selects the set of characters containing the character "T" by pressing key 35.

The CPU displays the appropriate second menu consisting of the individual characters. FIG 10 is a partial view of FIG 1 illustrating the second step of the preferred embodiment of the present invention. The user may then select the character "T" by pressing key 33.

The CPU then displays the characters "CAT", and again prompts for the next character by displaying the first menu. Although most operations of the calculator may be performed by using the mathematical function, numbers, and characters A-Z. Occasionally, there are uses for additional characters, referred to as extended characters. If the extended characters are few in number, they may be added to menus in unused spots. For example, spaces may be added to the unused soft-keys in each menu. However, usually, the number of extended characters will exceed the number of open spaces. Therefore an alternate method for entering these characters must be provided. Since these characters are entered relatively rarely, they do not need to be accessible in the two step process outlined above.

In the preferred embodiment of the present invention, extended characters may be added by dividing the extended characters into sets of characters, each set having one less character than the number of soft-keys available. The last soft-key is given the title "MORE" and is used to select the next menu containing extended characters. On the last menu, pressing "MORE" causes the first menu of extended characters to be displayed. The method for entering extended characters is illustrated with the next four figures.

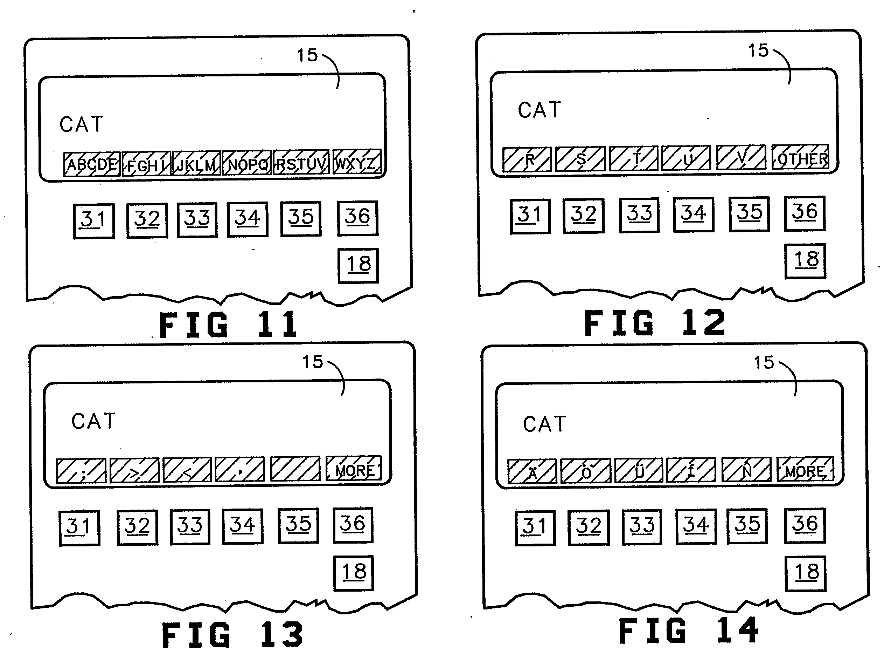

FIG 11 is a partial view of FIG 1 illustrating the first step of the preferred embodiment of the present invention. In order to get to the extended characters, the user selects any second menu. In this example, the user presses key 35.

The CPU displays the appropriate second menu consisting of the individual characters. FIG 12 is a partial view of FIG 1 illustrating the first step of the expanded embodiment of the present invention. To select the extended characters, the user presses key 36 labeled "OTHER". The calculator now enters the extended character mode.

The CPU displays the first extended character menu consisting of the individual characters. FIG 13 is a partial view of FIG 1 illustrating the second step of the expanded character mode. Since the character "Ä" does not appear, the search continues with the next menu by pressing the key 36.

The CPU displays the next extended character menu consisting of the individual characters. FIG 14 is a partial view of FIG 1 illustrating the third step of the expanded character mode. The user may then select the character "Ä" by pressing key 31.

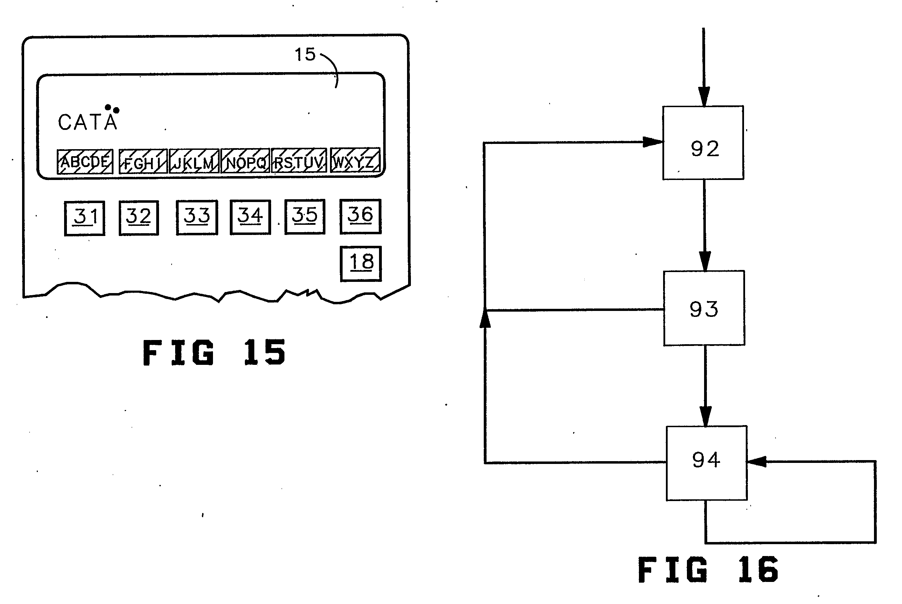

The CPU then displays the characters "CATÄ", and again prompts for the next character by displaying the first menu. FIG 15 is a partial view of FIG 1 illustrating the first step of the preferred embodiment of the present invention. The remainder of the equation may be entered accordingly.

FIG 16 is a flow chart illustrating preferred embodiment of the present invention. The flow chart comprises a series of steps 92 through 94. Upon entering the input character mode, the first step 92 of the preferred embodiment is to display the first menu and wait for the user response. Pressing key 18, the EXIT key, or the INPUT key will terminate the input mode.

The second step 93 is to display the appropriate second menu based upon the key pressed in step 92 and wait for user input. If the key pressed in response to this menu is a character key, i.e. a single character, that character is returned. If the key pressed is the "OTHER" key, then control passes to step 94. Pressing key 18 will return the system to step 92 with no other effect.

The third step 94 is to display the next extended character menu and wait for user input. If step 94 is being entered from step 93, the next menu will be the first menu. The system remains in step 94 looping through menus until either a key corresponding to a single character is pressed or until the key 18 is pressed in which case the system returns to step 92.

## Claims

1. An apparatus for inputting a plurality of characters by a user into a data processing system, the apparatus comprising:
display means (24) for displaying at least two lines, the first line for displaying one or more predetermined menus and any additional lines for displaying the characters inputted into the data processing system;
input means (25) for receiving the selection of the user, the number of input means being less than the number of characters;
menu storage (23) means for storing a plurality of predetermined menus; and
control means (21) connected to the display means, input means, and menu storage means and responsive to the input means for displaying menus and characters input by the user.

2. A method for inputting a plurality of characters from a user into a data processing system having a plurality of input means, the total number of input means being less than the number of characters, and a display, the method comprising:
dividing the characters into a plurality of sets, the number of characters in each set being less than or equal to the number of input means and the number of resulting sets is less than or equal to the number of input means;
displaying (92) each set in a location corresponding to an input means; .
receiving (97) a first response from the user selecting one of the sets;
displaying (93) each character of the selected set in a location corresponding to an input means;
receiving (93) a second response from the user selecting a character; and
inputting the character into the data processing system.

3. A method for inputting a plurality of characters from a user into a data processing system having a plurality of input means, the total number of input means being less than the number of characters, and a display, the method comprising:
dividing the characters into a first group of characters and a second group of characters, the number of characters in the first group being less than the square of input means less one;
dividing the first group of characters into a first plurality of sets, the number of characters in each set being less than or equal to the number of input means;
assigning a first switch symbol to at least one set in the first plurality of sets;
dividing the second group of characters into a second plurality of sets, the number of characters in each set being less than the number of input means less one;
assigning a second switch symbol to each set in the second plurality of sets;
displaying each set (step 92) in the first plurality of sets in a location corresponding to an input means;
receiving a first response (step 92) from the user selecting one of the sets;
displaying each (step 93) character or switch symbol of the selected set in a location corresponding to an input means;
receiving a response (step 93) from the user selecting a character or symbol; and
inputting, if a character (94) is selected, the character into the data processing system, or displaying, if the first switch symbol is selected, the first set of characters from the second plurality of sets corresponding to an input means, or if the second switch symbol is selected, the next set of characters from the second plurality of sets corresponding to an input means and repeating the steps of receiving a second response and inputting the character or displaying the next menu until a character is inputted.

**FIG 1**

**FIG 2**

FIG 3

FIG 4

FIG 5

FIG 6

EP 0 313 207 A2

C

| ABCDE | FGHI | JKLM | NOPQ | RSTUV | WXYZ |

31 32 33 34 35 36

18

**FIG 7**

C

| A | B | C | D | E | OTHER |

31 32 33 34 35 36

18

**FIG 8**

CA

| ABCDE | FGHI | JKLM | NOPQ | RSTUV | WXYZ |

31 32 33 34 35 36

18

**FIG 9**

CA

| R | S | T | U | V | OTHER |

31 32 33 34 35 36

18

**FIG 10**

CAT ABCDE FGHI JKLM NOPQ RSTUV WXYZ

15

31 32 33 34 35 36

18

**FIG 11**

CAT R S T U V OTHER

15

31 32 33 34 35 36

18

**FIG 12**

CAT . , ; : . ' ? / ! MORE

15

31 32 33 34 35 36

18

**FIG 13**

CAT á ó ú í ñ MORE

15

31 32 33 34 35 36

18

**FIG 14**

EP 0 313 207 A2

CATÄ

| ABCDE | FGHI | JKLM | NOPQ | RSTUV | WXYZ |

[31] [32] [33] [34] [35] [36]

[18]

**FIG 15**

**FIG 16**